# FASCICULE DE BREVET EUROPEEN

(11) **EP 3 495 228 B1**
(45) Date de publication et mention de la délivrance du brevet: **02.02.2022**
(21) Numéro de dépôt: 18211026.2
(22) Date de dépôt: 07.12.2018
(51) Int. Cl.: B61D 33/00, B60N 2/879

(54) **APPUI-TÊTE POUR SIÈGE DE VÉHICULE FERROVIAIRE**
KOPFSTÜTZE FÜR SITZ EINES SCHIENENFAHRZEUGS
HEADREST FOR A RAIL VEHICLE SEAT

(30) Priorité: 08.12.2017 FR 1761852
(43) Date de publication de la demande: 12.06.2019
(73) Titulaire: SpeedInnov, 75008 Paris (FR)
(72) Inventeur: PAILLER, Christophe, 17180 Perigny (FR); MERZOUKI, Faycal, 17220 La Jarrie (FR)
(74) Mandataire: Lavoix

(56) Documents cités:
- EP-A1- 2 213 503
- EP-A1- 2 351 662
- EP-A1- 2 602 224
- EP-A1- 2 620 332
- EP-A1- 2 730 479
- WO-A1-03/020588
- WO-A1-2014/039957
- JP-A- H07 264 689

## Description

La présente invention concerne un appui-tête pour siège de véhicule ferroviaire. La présente invention concerne, également, un siège de véhicule ferroviaire comprenant un tel appui-tête. La présente invention concerne aussi un véhicule ferroviaire comprenant une pluralité de tels sièges. La présente invention concerne, en outre, un procédé d'identification d'un siège de véhicule ferroviaire. La présente invention concerne, également, un procédé de maintenance d'un tel siège de véhicule ferroviaire.

Les sièges des véhicules ferroviaires font partie des éléments d'un véhicule devant être contrôlés régulièrement. Cela permet d'identifier les sièges défectueux et, ainsi, de procéder à des opérations de maintenance pour assurer un meilleur confort à l'utilisateur.

Toutefois, la rapidité et la fiabilité de la transmission des informations relatives aux sièges défectueux aux personnes effectuant la maintenance ne sont pas optimales.

Le document EP 2 351 662 A décrit un siège comprenant un appui-tête et un moyen d'identification sans fil placé sur l'appui-tête. Le document EP 2 213 503 A décrit un siège comprenant un appui-tête et un lecteur sans fil situé sur l'appui-tête.

Il existe donc un besoin pour un dispositif permettant d'améliorer la rapidité et la fiabilité de la transmission d'informations relatives à un siège, notamment en vue de mettre en œuvre des opérations de maintenance.

A cet effet, l'invention a pour objet un appui-tête selon la revendication 1.

Suivant des modes de réalisation particuliers, l'appui-tête comprend une ou plusieurs des caractéristiques des revendications 2 ou 3, prises isolément ou suivant toutes les combinaisons techniquement possibles.

L'invention concerne aussi un siège de véhicule ferroviaire selon la revendication 4.

L'invention concerne aussi un véhicule ferroviaire selon la revendication 5.

L'invention concerne, en outre, un procédé d'identification selon la revendication 6.

L'invention concerne aussi un procédé de maintenance selon la revendication 7.

Suivant des modes de mise en œuvre particuliers, le procédé de maintenance comprend les caractéristiques de la revendication 8.

D'autres caractéristiques et avantages de l'invention apparaitront à la lecture de la description qui suit de modes de réalisation de l'invention, donnée à titre d'exemple uniquement et en référence aux dessins qui sont :
- figure 1, une représentation schématique en perspective d'un siège de véhicule ferroviaire comprenant un appui-tête,
- figure 2, une représentation schématique en vue partiellement éclatée de l'appui-tête de la figure 1,
- figure 3, une représentation schématique d'une variante d'un appui-tête, et
- figure 4, une représentation schématique d'un véhicule comprenant une pluralité de sièges de la figure 1.

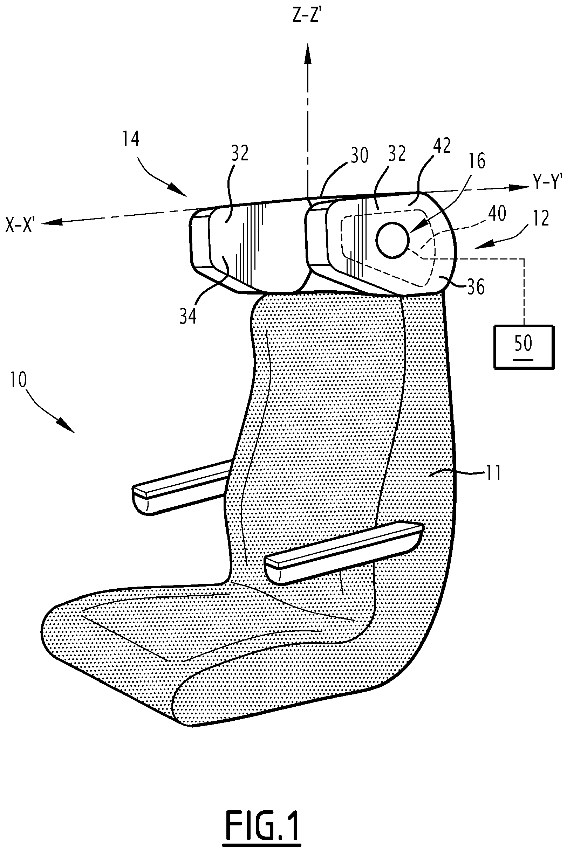

Un siège 10 de véhicule ferroviaire est illustré sur la figure 1.

Le véhicule ferroviaire est, par exemple, un tramway, un train ou encore un tram-train.

Dans la suite de la description, les termes « avant » et « arrière » sont définis par rapport au sens de circulation du véhicule 10.

Le terme « longitudinal » est défini par rapport à la direction selon laquelle circule le véhicule 10, c'est-à-dire la direction dans laquelle s'étendent les rails sur lesquels ledit véhicule circule. Le terme « transversal » est défini par rapport à une direction sensiblement perpendiculaire à la direction longitudinale dans un plan horizontal, c'est-à-dire la direction selon laquelle les rails sont écartés l'un de l'autre. La direction perpendiculaire à la direction longitudinale et à la direction transversale est appelée « direction verticale ».

Les termes « haut » et « bas » sont définis par rapport à la direction verticale du véhicule 10, le « bas » étant relativement plus proche que le «haut» des rails sur lesquels le véhicule 10 circule. Les termes « supérieur » et « inférieur » sont compris de manière analogue aux termes respectivement « haut » et « bas ».

Le siège 10 comprend un dossier 11 et un appui-tête 12.

Le dossier 11 est destiné à recevoir un corps d'un utilisateur.

L'appui-tête 12 est fixé sur le haut du dossier 11 de sorte à recevoir une tête d'un utilisateur lorsque l'utilisateur est assis sur le siège 10.

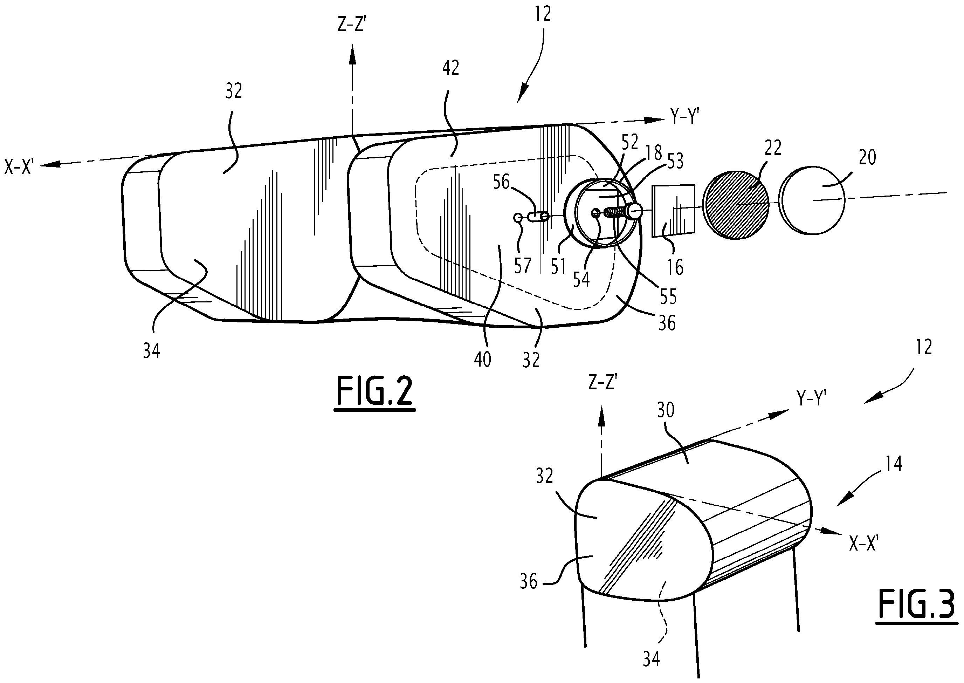

Comme illustré sur les figures 1 et 2, l'appui-tête 12 s'étend suivant la direction longitudinale selon un axe longitudinal X-X', suivant la direction transversale selon un axe transversal Y-Y' et suivant la direction verticale selon un axe vertical Z-Z'. De tels axes longitudinal X-X', transversal Y-Y' et vertical Z-Z' sont illustrés sur les figures 1 et 2.

Dans la suite de la description, une dimension selon l'axe longitudinal X-X' est appelée « épaisseur ». Une dimension selon l'axe transversal Y-Y' est appelée « longueur ». Une dimension selon l'axe vertical Z-Z' est appelée « hauteur ».

Comme visible sur la figure 2, l'appui-tête 12 comprend une structure 14, au moins une première unité de communication sans fil 16, au moins un support 18 et au moins un capot 20. Optionnellement, l'appui-tête 12 comprend, en outre, au moins une étiquette de signalisation 22.

La structure 14 comprend une paroi frontale 30 et deux parois latérales 32.

La paroi frontale 30 est destinée à entrer en contact avec la tête d'un utilisateur du siège 10.

La paroi frontale 30 présente une hauteur selon l'axe vertical Z-Z', une longueur selon l'axe transversale Y-Y' et une épaisseur selon l'axe longitudinal X-X'. La hauteur, la longueur et l'épaisseur de la paroi frontale 30 varient en fonction du type de siège 10.

Les parois latérales 32 sont disposées de part et d'autre de la paroi frontale 30 selon l'axe transversal Y-Y'.

Dans le mode de réalisation illustré sur les figures 1 et 2, les parois latérales 32 font saillie à partir de la paroi frontale 30 selon l'axe longitudinal X-X'. Ainsi, les parois latérales 32 forment des rebords destinés à retenir latéralement la tête de l'utilisateur lorsque l'utilisateur est assis sur le siège 10 de sorte que ladite tête soit maintenue sur la paroi frontale 30.

Dans un tel mode de réalisation, chaque paroi latérale 32 présente une hauteur selon l'axe vertical Z-Z', une longueur selon l'axe transversale Y-Y' et une épaisseur selon l'axe longitudinal X-X'. La hauteur, la longueur et l'épaisseur de la paroi frontale 30 varient en fonction du type de siège 10.

Dans une variante illustrée sur la figure 3, les parois latérales 32 forment les côtés de la paroi frontale 30 selon l'axe transversal Y-Y'. Ainsi, chaque paroi latérale 32 s'étend dans le prolongement de la paroi frontale 30 selon l'axe transversal Y-Y'. Chaque paroi latérale 32 ne fait alors pas saillie à partir de la paroi frontale 30 selon l'axe longitudinal X-X'.

Chaque paroi latérale 32 comprend une surface interne 34 et une surface externe 36.

La surface interne 34 est orientée vers l'intérieur de l'appui-tête 12, c'est-à-dire en vis-à-vis de la surface interne 34 de l'autre paroi latérale 32. Il est entendu par l'expression « en vis-à-vis » le fait que la surface interne 34 de l'une des parois latérales 32 est disposée en face de la surface interne 34 de l'autre paroi latérale 32. Autrement formulé, la projection de la surface interne 34 de l'une des parois latérales 32 dans un plan parallèle à ladite surface interne 34 est confondue avec la projection de la surface interne 34 de l'autre paroi latérale 32 dans le même plan.

La surface externe 36 est orientée du côté opposé à la surface interne 34 de la paroi latérale 32 correspondante.

La surface externe 36 de chaque paroi latérale 32 est formée d'une zone centrale 40 et d'une zone périphérique 42.

La zone périphérique 42 entoure la zone centrale 40, c'est-à-dire que la zone centrale 40 est délimitée par la zone périphérique 42 sur l'ensemble des extrémités de ladite zone centrale 40.

Le ratio entre la zone centrale 40 de chaque surface externe 36 et la zone périphérique 42 de ladite surface externe 36 est compris au sens large entre 80% et 120%.

La première unité de communication sans fil 16 est fixée, via le support 18, sur l'une des parois latérales 32 de la structure 14 de l'appui-tête 12.

La première unité de communication 16 est, avantageusement, fixée sur l'une des parois latérales 32 de sorte à rester visible et accessible quelle que soit l'orientation du siège 10. Par exemple, lorsque le siège 10 est équipé d'une coque permettant audit siège 10 de pivoter entre différentes positions, la première unité de communication 16 est positionnée sur l'une des parois latérales 32 de sorte à ne pas être masquée partiellement ou totalement par la coque quelle que soit la position du siège 10.

Par exemple, la première unité de communication 16 est fixée sur la zone centrale 40 de la surface externe 36 de la paroi latérale 32 correspondante.

En variante, la première unité de communication 16 est fixée sur la zone périphérique 42 de la surface externe 36 de la paroi latérale 32 correspondante.

La première unité de communication 16 comprend au moins une antenne, une mémoire, et éventuellement, un microprocesseur.

L'antenne de la première unité de communication 16 est, par exemple, une antenne radiofréquence.

La mémoire de chaque première unité de communication 16 comprend, par exemple, des informations relatives au siège 10 de véhicule ferroviaire sur lequel l'appui-tête 12 est destiné à être fixé.

De telles informations sont, par exemple, un identifiant associé au siège 10 ou des informations relatives à l'état du siège 10.

Les informations relatives à l'état de l'élément 16 sont, par exemple, des informations relatives : à l'état d'usure du siège 10, au niveau de propreté du siège 10, à des défaillances du siège 10 ou encore à des défaillances d'équipements présents sur le siège 10.

La première unité de communication 16 est, par exemple, formée d'une étiquette, telle qu'une étiquette adhésive.

La première unité de communication 16 est, par exemple, une puce de radio identification, telle qu'une puce RFID (de l'anglais «Radio Frequency Identification » traduit en français par « Radio Identification »). En variante, la première unité de communication 16 est une puce de communication de proximité, dite puce NFC (de l'anglais « Near Field Communication » traduit en français par « Communication dans un Champ Proche »).

La première unité de communication 16 est configurée pour communiquer avec une ou plusieurs deuxièmes unités de communication 50.

La deuxième unité de communication 50 comprend au moins une antenne, telle qu'une antenne radiofréquence, une mémoire, et éventuellement un microprocesseur.

Lorsque la première unité de communication 16 est une étiquette RFID, la deuxième unité de communication 50 est un lecteur RFID. Lorsque la première unité de communication 16 est une puce NFC, la deuxième unité de communication 50 est un lecteur NFC.

Dans l'exemple illustré sur la figure 2, le support 18 présente un socle 51 et une base 52.

Le socle 51 délimite le support 18. Dans l'exemple illustré sur la figure 2, le socle 51 a une forme cylindrique.

La base 52 est située à l'une des extrémités du socle 51.

La base 52 est formée d'une surface plane présentant un renfoncement. Le renfoncement délimite un logement 53.

Le logement 53 est complémentaire de la première unité de communication 16. La première unité de communication 16 est reçue dans le logement 53. La première unité de communication 16 est, par exemple, maintenue dans le logement 53 par emboîtage.

Le support 18 est fixé sur l'une des parois latérales 32 de la structure 14.

Dans l'exemple illustré sur la figure 2, le support 18 est fixé mécaniquement sur la paroi latérale 32 correspondante. Plus précisément, la base 52 du support 18 présente un trou 54 dans laquelle une vis 55 est introduite pour fixer mécaniquement, via un insert 56 (ou une lamelle), le support 18 dans un trou 57 de la paroi latérale 32 correspondante de l'appui-tête 12. Dans un tel exemple, le trou 54 présente un pourtour qui est fileté ou non. Le pourtour du trou 54 est, par exemple, positionné au centre de la base 52 du support 18.

En variante, le support 18 est collé sur la paroi latérale 32 correspondante.

Le capot 20 est propre à protéger la première unité de communication 16.

Le capot 20 est, avantageusement de forme complémentaire à la forme du socle 51 du support 18. Cela permet d'introduire le capot 20 à l'intérieur du socle 51 pour protéger la base 52 du support 18.

Dans le mode de réalisation illustré sur les figures 1 et 2, le capot 20 recouvre la première unité de communication 16.

Le capot 20 est, de préférence, réalisé dans un matériau propre à laisser passer les ondes radiofréquences. Par exemple, le capot 20 est réalisé en verre ou en plastique. Le capot 20 est, par exemple, une verrine transparente.

L'étiquette 22 est propre à signaler la présence de la première unité de communication 16 au niveau de la paroi latérale 32 de la structure 14 de l'appui-tête 12. L'étiquette 22 comprend, par exemple, des informations relatives à la première unité de communication 16. Par exemple, l'étiquette 22 comprend un pictogramme signalant la présence de la première unité de communication 16.

L'étiquette 22 est, par exemple, directement collée sur la première unité de communication 16.

Le siège 10 tel que décrit précédemment est destiné à être disposé dans un véhicule ferroviaire.

De préférence, la paroi latérale 32 de l'appui-tête 12 du siège 10 sur laquelle est fixée la première unité de communication 16 est dégagée, c'est-à-dire qu'une telle paroi latérale 32 n'est obstruée par aucun obstacle. Ainsi, cela permet de faciliter l'accès à la première unité de communication 16.

Avantageusement, l'appui-tête 12 tel que décrit précédemment est destiné à équiper des sièges 10 destinés aussi bien à des compartiments de première classe qu'à des compartiments de deuxième classe.

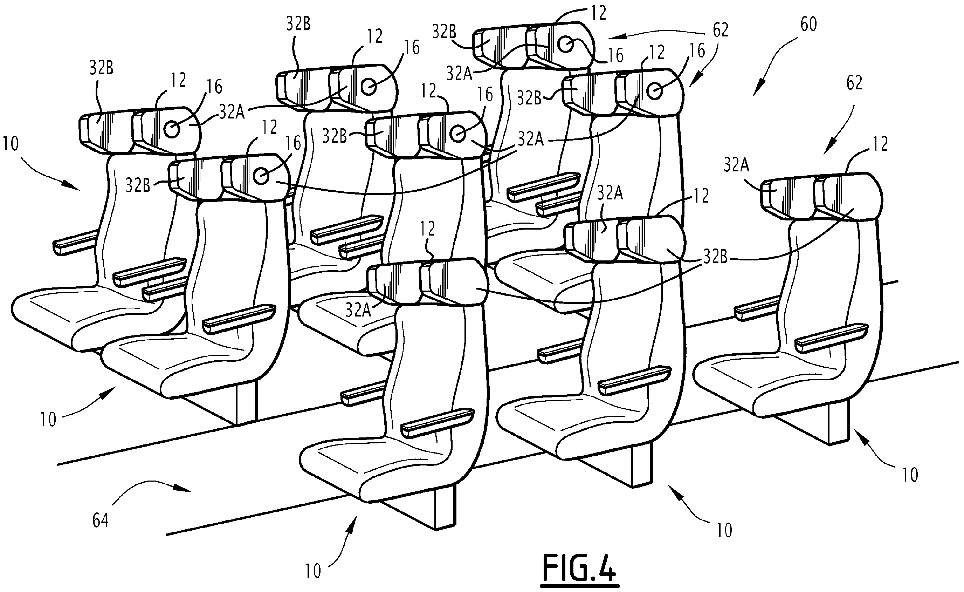

La figure 4 illustre un exemple de véhicule ferroviaire 60 comprend une pluralité de sièges 10 équipés chacun d'un appui-tête 12 tel que décrit précédemment.

Les sièges 10 sont, par exemple, disposés en rangée 62, au moins deux rangées 62 étant séparées par un couloir 64.

L'une des parois latérales 32 de chaque appui-tête 12 est alors une paroi latérale proximale 32A relativement au couloir 64, c'est-à-dire la paroi latérale 32 la plus proche du couloir. L'autre paroi latérale 32 de chaque appui-tête 12 est alors une paroi latérale distale 32B relativement au couloir 64, c'est-à-dire la paroi latérale 32 la plus éloignée du couloir.

De préférence, la paroi latérale sur laquelle est fixée la première unité de communication 16 de chaque appui-tête 12 est une paroi latérale proximale 32A. Ainsi, cela permet à la première unité de communication 16 d'être accessible à un opérateur se déplaçant dans le couloir 64 délimité par les rangées 62 de siège 10. L'accessibilité de la première unité de communication 16 est donc optimisée.

En variante, lorsque le siège 10 est un siège simple propre à tourner sur lui-même (siège tournant), la paroi latérale 32 de chaque appui-tête 12 est équipée d'une première unité de communication 16 quelle que soit la localisation de ladite paroi latérale 32 par rapport au couloir 64. Le siège 10 comprend alors deux premières unités de communication.

En variante, lorsque le siège 10 est un siège double (c'est-à-dire deux sièges simples accolés) propre à tourner sur lui-même, ledit siège 10 comprend deux premières unités de communication 16 : une sur la paroi proximale 32A de l'un des sièges simples et l'autre sur la paroi distale 32B de l'autre siège simple.

Un procédé d'identification du siège 10 de véhicule ferroviaire va maintenant être décrit.

Comme expliqué précédemment, le siège 10 est associé à un identifiant. Un tel identifiant est, par exemple un identifiant unique permettant de distinguer le siège 10 d'autres sièges 10 éventuellement présents dans le véhicule ferroviaire.

Le procédé d'identification comprend une étape de communication avec la première unité de communication 16 pour recueillir l'identifiant du siège 10. Une telle étape de communication est, par exemple, réalisée au moyen de la deuxième unité de communication 50.

Un procédé de maintenance du siège 10 de véhicule ferroviaire va maintenant être décrit.

Le procédé de maintenance comprend une étape de communication avec la première unité de communication 16 du siège 10 pour requérir des informations relatives à l'état du siège 10. Une telle étape de communication est, par exemple, réalisée au moyen de la deuxième unité de communication 50.

Ensuite, en fonction des informations communiquées par la première unité de communication 16, des opérations de maintenance sont mises en œuvre sur le siège 10 afin de remédier aux disfonctionnements éventuels du siège 10.

Puis, une fois les opérations de maintenance terminées, le procédé comprend une étape de mise à jour des informations relatives à l'état du siège 10 qui sont mémorisées dans la mémoire de la première unité de communication 16.

De manière plus générale, les informations relatives à l'état du siège 10 mémorisées dans la mémoire de la première unité de communication 16 sont susceptibles d'être mise à jour lorsque l'état du siège 10 a changé ou encore lorsque l'opérateur choisi d'effectuer une telle mise à jour.

Les procédés d'identification et de maintenance sont susceptibles d'être mis en œuvre en complément l'un de l'autre.

Ainsi, la disposition de la première unité de communication 16 dans l'appui-tête 12 du siège 10 permet de rendre ladite première unité de communication 16 plus accessible par un opérateur. Cela est d'autant plus vrai lorsque la première unité de communication 16 est orientée du côté couloir d'un véhicule ferroviaire comme cela est décrit précédemment.

Un tel appui-tête 12 permet une identification fiable est rapide du siège 10 correspondant. Il est donc plus aisé de réaliser des opérations de maintenance sur le siège 10 et de suivre le déroulement desdites opérations de maintenance.

Ainsi, un tel appui-tête permet d'améliorer la rapidité et la fiabilité de la transmission d'informations relatives à un siège notamment en vue de mettre en œuvre des opérations de maintenance. Cela permet notamment de faciliter la maintenance préventive et la maintenance corrective.

Dans une variante, ou lorsque le siège 10 est un siège tournant, le siège 10 est susceptible de comprendre d'autres premières unités de communications 16. Par exemple, l'appui-tête 12 comprend au moins une autre première unité de communication sans fil 16 disposée sur l'autre des parois latérales 32 de la structure 14, c'est-à-dire sur la paroi latérale 32 ne comprenant pas la première unité de communication 16 initiale. Une telle première unité de communication sans fil 16 additionnelle permet notamment de faciliter encore l'accessibilité aux informations relatives au siège 10, par exemple lorsque le siège 10 est entouré de deux couloirs sur chacun des côtés latéraux dudit siège 10.

## Revendications

1. Appui-tête (12) pour siège (10) de véhicule ferroviaire, l'appui-tête (12) comprenant :
- une structure (14) comprenant une paroi frontale (30) destinée à entrer en contact avec une tête d'un utilisateur et deux parois latérales (32) disposées de part et d'autre de la paroi frontale (30),
- au moins une première unité de communication sans fil (16), la première unité de communication sans fil (16) étant fixée sur l'une des parois latérales (32) de la structure (14),
**caractérisé en ce que** l'appui-tête (12) comprend un capot (20) de protection de la première unité de communication (16), le capot (20) recouvrant la première unité de communication (16), l'appui-tête (12) comprenant un support (18) fixé sur l'une des parois latérales (32) de la structure (14), le support (18) présentant une base (52), la base (52) étant formée d'une surface plane présentant un renfoncement, le renfoncement délimitant un logement (53), le logement (53) étant complémentaire de la première unité de communication (16), la première unité de communication (16) étant reçue dans le logement (53), la base (52) du support (18) présentant un trou (54) dans laquelle une vis (55) est introduite pour fixer mécaniquement le support (18) dans un trou (57) de la paroi latérale (32) correspondante de l'appui-tête (12).

2. Appui-tête (12) selon la revendication 1, dans lequel chaque paroi latérale (32) comprend une surface interne (34) et une surface externe (36), la première unité de communication (16) étant fixée sur la surface externe (36) de la paroi latérale (32) correspondante.

3. Appui-tête (12) selon la revendication 2, dans lequel chaque surface externe (36) est formée d'une zone centrale (40) et d'une zone périphérique (42) entourant la zone centrale (40), le ratio entre la zone centrale (40) de la surface externe (36) et la zone périphérique (42) de la surface externe (36) étant compris au sens large entre 80 pourcents et 120 pourcents, la première unité de communication (16) étant fixée sur la zone centrale (40) de la surface externe (36) de la paroi latérale (32) correspondante.

4. Siège (10) de véhicule ferroviaire comprenant un appui-tête (12) selon l'une quelconque des revendications 1 à 3.

5. Véhicule ferroviaire (60) comprenant une pluralité de sièges (10) selon la revendication 4, les sièges (10) étant disposés en rangées (62), au moins deux rangées (62) étant séparées par un couloir (64), l'une des parois latérales (32) de chaque appui-tête (12) étant une paroi latérale proximale (32A) relativement au couloir (64) et l'autre paroi latérale (32) étant une paroi latérale distale (32B) relativement au couloir (64), la paroi latérale (32) sur laquelle est fixée la première unité de communication (16) de chaque appui-tête (12) étant une paroi latérale proximale (32A).

6. Procédé d'identification d'un siège (10) de véhicule ferroviaire, le siège (10) comprenant un appui-tête (12), l'appui-tête (12) comprenant :
- une structure (14) comprenant une paroi frontale (30) destinée à entrer en contact avec une tête d'un utilisateur et deux parois latérales (32) disposées de part et d'autre de la paroi frontale (30),
- au moins une première unité de communication sans fil (16), la première unité de communication sans fil (16) étant fixée sur l'une des parois latérales (32) de la structure (14), et
**caractérisé en ce que** l'appui-tête comprend un capot (20) de protection de la première unité de communication (16), le capot (20) recouvrant la première unité de communication (16), l'appui-tête (12) comprenant un support (18) fixé sur l'une des parois latérales (32) de la structure (14), le support (18) présentant une base (52), la base (52) étant formée d'une surface plane présentant un renfoncement, le renfoncement délimitant un logement (53), le logement (53) étant complémentaire de la première unité de communication (16), la première unité de communication (16) étant reçue dans le logement (53), la base (52) du support (18) présentant un trou (54) dans laquelle une vis (55) est introduite pour fixer mécaniquement le support (18) dans un trou (57) de la paroi latérale (32) correspondante de l'appui-tête (12),
le siège (10) étant associé à un identifiant, la première unité de communication (16) comprenant une mémoire dans laquelle l'identifiant du siège (10) est mémorisé,
le procédé comprenant une étape de communication avec la première unité de communication (16) pour recueillir l'identifiant du siège (10).

7. Procédé de maintenance d'un siège (10) de véhicule ferroviaire, le siège (10) comprenant un appui-tête (12), l'appui-tête (12) comprenant :
- une structure (14) comprenant une paroi frontale (30) destinée à entrer en contact avec une tête d'un utilisateur et deux parois latérales (32) disposées de part et d'autre de la paroi frontale (30),
- au moins une première unité de communication sans fil (16), la première unité de communication sans fil (16) étant fixée sur l'une des parois latérales (32) de la structure (14), et
**caractérisé en ce que** l'appui-tête comprend un capot (20) de protection de la première unité de communication (16), le capot (20) recouvrant la première unité de communication (16), l'appui-tête (12) comprenant un support (18) fixé sur l'une des parois latérales (32) de la structure (14), le support (18) présentant une base (52), la base (52) étant formée d'une surface plane présentant un renfoncement, le renfoncement délimitant un logement (53), le logement (53) étant complémentaire de la première unité de communication (16), la première unité de communication (16) étant reçue dans le logement (53), la base (52) du support (18) présentant un trou (54) dans laquelle une vis (55) est introduite pour fixer mécaniquement le support (18) dans un trou (57) de la paroi latérale (32) correspondante de l'appui-tête (12),
la première unité de communication (16) comprenant une mémoire dans laquelle des informations relatives à l'état du siège (10) sont mémorisées,
le procédé comprenant les étapes de :
- communication avec la première unité de communication (16) pour recueillir les informations relatives à l'état du siège (10), et
- mise en œuvre d'opérations de maintenance sur le siège (10) en fonction des informations communiquées.

8. Procédé de maintenance selon la revendication 7, dans lequel le procédé comprend une étape de mise à jour des informations relatives à l'état du siège (10) mémorisées dans la mémoire de la première unité de communication (16) lorsque l'état du siège (10) a changé, en particulier, lorsque des opérations de maintenance ont été mises en œuvre sur le siège (10).

## Patentansprüche

1. Kopfstütze (12) für einen Sitz (10) für Schienenfahrzeuge,
wobei die Kopfstütze (12) umfasst:
- eine Struktur (14), umfassend eine Vorderwand (30), die zum Kontaktieren eines Kopfes eines Nutzers bestimmt ist, und Zwei Seitenwände (32) beiderseits der Vorderwand (30),
- mindestens eine erste Funkkommunikationseinheit (16), wobei die erste Funkkommunikationseinheit (16) an einer der Seitenwände (32) der Struktur (14) befestigt ist,
**dadurch gekennzeichnet, dass** die Kopfstütze (12) eine Schutzhaube (20) für die erste Kommunikationseinheit (16) umfasst, wobei die Haube (20) die erste Kommunikationseinheit (16) bedeckt, wobei die Kopfstütze (12) eine an einer der Seitenwände (32) der Struktur (14) befestigte Stütze (18) umfasst, wobei die Stütze (18) eine Basis (52) aufweist, wobei die Basis (52) aus einer flachen Oberfläche mit einer Vertiefung besteht, wobei die Vertiefung ein Gehäuse (53) abgrenzt, wobei das Gehäuse (53) die erste Kommunikationseinheit (16) ergänzt, wobei die erste Kommunikationseinheit (16) ins Gehäuse (53) aufgenommen ist, wobei die Basis (52) der Stütze (18) eine Öffnung (54) aufweist, in die eine Schraube (55) eingeführt ist, um die Stütze (18) in einer Öffnung (57) der entsprechenden Seitenwand (32) der Kopfstütze (12) mechanisch zu befestigen.

2. Kopfstütze (12) nach Anspruch 1, wobei jede Seitenwand (32) eine Innen- (34) und eine Außenfläche (36) umfasst, wobei die erste Kommunikationseinheit (16) auf der Außenfläche (36) der entsprechenden Seitenwand (32) befestigt ist.

3. Kopfstütze (12) nach Anspruch 2, wobei jede Außenfläche (36) aus einem zentralen Bereich (40) und einem diesen (40) umgebenden peripheren Bereich (42) besteht, wobei das Verhältnis des zentralen Bereichs (40) der Außenfläche (36) zum peripheren Bereich (42) der Außenfläche (36) ungefähr zwischen 80 und 120 % liegt, wobei die erste Kommunikationseinheit (16) auf dem zentralen Bereich (40) der Außenfläche (36) der entsprechenden Seitenwand (32) befestigt ist.

4. Sitz (10) für Schienenfahrzeuge, umfassend eine Kopfstütze (12) nach einem der Ansprüche 1 - 3.

5. Schienenfahrzeug (60), umfassend eine Vielzahl Sitze (10) nach Anspruch 4,
wobei die Sitze (10) in Reihen (62) angeordnet sind, wobei mindestens zwei Reihen (62) durch einen Gang (64) getrennt sind, wobei eine der Seitenwände (32) jeder Kopfstütze (12) eine in Bezug auf den Gang (64) proximale Seitenwand (32A) ist und
wobei die andere Seitenwand (32) eine in Bezug auf den Gang (64) distale Seitenwand (32B) ist, wobei die Seitenwand (32), an der die erste Kommunikationseinheit (16) jeder Kopfstütze (12) befestigt ist, eine proximale Seitenwand (32A) ist.

6. Verfahren zur Erkennung eines Sitzes (10) eines Schienenfahrzeugs, wobei der Sitz (10) eine Kopfstütze (12) umfasst, wobei die Kopfstütze (12) umfasst:
- eine Struktur (14), umfassend eine Vorderwand (30), die zum Kontaktieren eines Kopfes eines Nutzers bestimmt ist, und zwei Seitenwände (32) beiderseits der Vorderwand (30),
- mindestens eine erste Funkkommunikationseinheit (16), - wobei die erste Funkkommunikationseinheit (16) an einer der Seitenwände (32) der Struktur (14) befestigt ist und
**dadurch gekennzeichnet, dass** die Kopfstütze eine Schutzhaube (20) für die erste Kommunikationseinheit (16) umfasst, wobei die Haube (20) die erste Kommunikationseinheit (16) bedeckt, wobei die Kopfstütze (12) eine an einer der Seitenwände (32) der Struktur (14) befestigte Stütze (18) umfasst, wobei die Stütze (18) eine Basis (52) aufweist, wobei die Basis (52) aus einer flachen Oberfläche mit einer Vertiefung besteht, wobei die Vertiefung ein Gehäuse (53) abgrenzt, wobei das Gehäuse (53) die erste Kommunikationseinheit (16) ergänzt, wobei die erste Kommunikationseinheit (16) ins Gehäuse (53) aufgenommen ist, wobei die Basis (52) der Stütze (18) eine Öffnung (54) aufweist, in die eine Schraube (55) eingeführt ist, um die Stütze (18) in einer Öffnung (57) der entsprechenden Seitenwand (32) der Kopfstütze (12) mechanisch zu befestigen.
wobei dem Sitz (10) ein Kennzeichen zugeordnet ist,
wobei die erste Kommunikationseinheit (16) einen Speicher umfasst, in dem das Kennzeichen des Sitzes (10) gespeichert ist,
wobei das Verfahren umfasst: Kommunizieren mit der ersten Kommunikationseinheit (16), um das Kennzeichen des Sitzes (10) zu erfassen.

7. Verfahren zur Wartung eines Sitzes (10) eines Schienenfahrzeugs, wobei der Sitz (10) eine Kopfstütze (12) umfasst, wobei die Kopfstütze (12) umfasst:
- - eine Struktur (14), umfassend eine Vorderwand (30), die zum Kontaktieren eines Kopfes eines Nutzers bestimmt ist, und zwei Seitenwände (32) beiderseits der Vorderwand (30),
- mindestens eine erste Funkkommunikationseinheit (16), wobei die erste Funkkommunikationseinheit (16) an einer der Seitenwände (32) der Struktur (14) befestigt ist und
**dadurch gekennzeichnet, dass** die Kopfstütze eine Schutzhaube (20) für die erste Kommunikationseinheit (16) umfasst, wobei die Haube (20) die erste Kommunikationseinheit (16) bedeckt, wobei die Kopfstütze (12) eine an einer der Seitenwände (32) der Struktur (14) befestigte Stütze (18) umfasst, wobei die Stütze (18) eine Basis (52) aufweist, wobei die Basis (52) aus einer flachen Oberfläche mit einer Vertiefung besteht, wobei die Vertiefung ein Gehäuse (53) abgrenzt, wobei das Gehäuse (53) die erste Kommunikationseinheit (16) ergänzt, wobei die erste Kommunikationseinheit (16) ins Gehäuse (53) aufgenommen ist, wobei die Basis (52) der Stütze (18) eine Öffnung (54) aufweist, in die eine Schraube (55) eingeführt ist, um die Stütze (18) in einer Öffnung (57) der entsprechenden Seitenwand (32) der Kopfstütze (12) mechanisch zu befestigen.
wobei die erste Kommunikationseinheit (16) einen Speicher umfasst, in dem Informationen über den Zustand des Sitzes (10) gespeichert sind,
wobei das Verfahren die Schritte umfasst:
- Kommunizieren mit der ersten Kommunikationseinheit (16), um Informationen über den Zustand des Sitzes (10) zu erfassen, und
- Ausführen von Wartungsvorgängen am Sitz (10) in Abhängigkeit der übermittelten Informationen.

8. Verfahren nach Anspruch 7, wobei das Verfahren umfasst: Aktualisieren der im Speicher der ersten Kommunikationseinheit (16) gespeicherten Informationen über den Zustand des Sitzes (10), wenn sich der Zustand des Sitzes (10) geändert hat, und zwar insbesondere dann, wenn Wartungsvorgänge am Sitz (10) ausgeführt worden sind.

## Claims

1. A headrest (12) for a rail vehicle seat (10), the headrest (12) comprising:
- a structure (14) comprising a front wall (30) intended to come into contact with a head of a user and two side walls (32) arranged on either side of the front wall (30),
- at least one first wireless communication unit (16), the first wireless communication unit (16) being fastened on one of the side walls (32) of the structure (14),
**characterized in that** the headrest (12) comprises a protective cover (20) of the first communication unit (16), the cover (20) covering the first communication unit (16), the headrest (12) comprising a support (18) fastened on one of the side walls (32) of the structure (14), the support (18) having a base (52), the base (52) being formed by a flat surface having a recess, the recess delimiting a housing (53), the housing (53) being complementary with the first communication unit (16), the first communication unit (16) being received in the housing (53), the base (52) of the support (18) having a hole (54) in which a screw (55) is introduced to mechanically fasten the support (18) in a hole (57) of the corresponding side wall (32) of the headrest (12).

2. The headrest (12) according to claim 1, wherein each side wall (32) comprises an inner surface (34) and an outer surface (36), the first communication unit (16) being fastened on the outer surface (36) of the corresponding side wall (32).

3. The headrest (12) according to claim 2, wherein each outer surface (36) is formed by a central zone (40) and a peripheral zone (42) surrounding the central zone (40), the ratio between the central zone (40) of the outer surface (36) and the peripheral zone (42) of the outer surface (36) being comprised broadly speaking between 80 percent and 120 percent, the first communication unit (16) being fastened on the central zone (40) of the outer surface (36) of the corresponding side wall (32).

4. A rail vehicle seat (10) comprising a headrest (12) according to any one of claims 1 to 3.

5. A rail vehicle (60) comprising a plurality of seats (10) according to claim 4, the seats (10) being arranged in rows (62), at least two rows (62) being separated by an aisle (64), one of the side walls (32) of each headrest (12) being a proximal side wall (32A) relative to the aisle (64) and the other side wall (32) being a distal side wall (32B) relative to the aisle (64), the side wall (32) on which the first communication unit (16) of each headrest (12) is fastened being a proximal side wall (32A).

6. A method for identifying a rail vehicle seat (10), the seat (10) comprising a headrest (12), the headrest (12) comprising:
- a structure (14) comprising a front wall (30) intended to come into contact with a head of a user and two side walls (32) arranged on either side of the front wall (30),
- at least one first wireless communication unit (16), the first wireless communication unit (16) being fastened on one of the side walls (32) of the structure (14), and
**characterized in that** the headrest comprises a protective cover (20) of the first communication unit (16), the cover (20) covering the first communication unit (16), the headrest (12) comprising a support (18) fastened on one of the side walls (32) of the structure (14), the support (18) having a base (52), the base (52) being formed by a flat surface having a recess, the recess delimiting a housing (53), the housing (53) being complementary with the first communication unit (16), the first communication unit (16) being received in the housing (53), the base (52) of the support (18) having a hole (54) in which a screw (55) is introduced to mechanically fasten the support (18) in a hole (57) of the corresponding side wall (32) of the headrest (12),
the seat (10) being associated with an identifier, the first communication unit (16) comprising a memory in which the identifier of the seat (10) is stored,
the method comprising a step for communication with the first communication unit (16) to collect the identifier of the seat (10).

7. A method for maintenance of a rail vehicle seat (10), the seat (10) comprising a headrest (12), the headrest (12) comprising:
- a structure (14) comprising a front wall (30) intended to come into contact with a head of a user and two side walls (32) arranged on either side of the front wall (30),
- at least one first wireless communication unit (16), the first wireless communication unit (16) being fastened on one of the side walls (32) of the structure (14), and
**characterized in that** the headrest comprises a protective cover (20) of the first communication unit (16), the cover (20) covering the first communication unit (16), the headrest (12) comprising a support (18) fastened on one of the side walls (32) of the structure (14), the support (18) having a base (52), the base (52) being formed by a flat surface having a recess, the recess delimiting a housing (53), the housing (53) being complementary with the first communication unit (16), the first communication unit (16) being received in the housing (53), the base (52) of the support (18) having a hole (54) in which a screw (55) is introduced to mechanically fasten the support (18) in a hole (57) of the corresponding side wall (32) of the headrest (12),
the first communication unit (16) comprising a memory in which information relative to the state of the seat (10) is stored,
the method comprising the following steps:
- communication with the first communication unit (16) to collect the information relative to the state of the seat (10), and
- implementing maintenance operations on the seat (10) based on the communication information.

8. The maintenance method according to claim 7, wherein the method comprises a step for updating the information relative to the state of the seat (10) stored in the memory of the first communication unit (16) when the state of the seat (10) has changed, in particular, when maintenance operations have been implemented on the seat (10).
